(19) **Europäisches Patentamt European Patent Office Office européen des brevets**

(11) **EP 2 656 027 B1**

(12) **FASCICULE DE BREVET EUROPEEN**

(45) Date de publication et mention
de la délivrance du brevet:
**03.11.2021 Bulletin 2021/44**

(21) Numéro de dépôt: **11815478.0**

(22) Date de dépôt: **20.12.2011**

(51) Int Cl.:
***G01J 3/02*** *(2006.01)*     ***G01J 3/10*** *(2006.01)*
***G01J 3/44*** *(2006.01)*

(86) Numéro de dépôt international:
**PCT/FR2011/053102**

(87) Numéro de publication internationale:
**WO 2012/085455 (28.06.2012 Gazette 2012/26)**

(54) **DISPOSITIF ET PROCEDE DE VISUALISATION ET DE MESURE DE DIFFUSION RAMAN**

VORRICHTUNG UND VERFAHREN ZUR BEOBACHTUNG UND ZUR MESSUNG VON RAMAN-STREUUNG

DEVICE AND METHOD FOR OBSERVING AND FOR MEASURING RAMAN SCATTERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2010 FR 1060898**

(43) Date de publication de la demande:
**30.10.2013 Bulletin 2013/44**

(73) Titulaire: **HORIBA France SAS**
**91120 Palaiseau (FR)**

(72) Inventeurs:
• **FROIGNEUX, Emmanuel**
 **F-59650 Villeuneuve d'Ascq (FR)**
• **DE BETTIGNIES, Philippe**
 **F-59130 Lambersart (FR)**

(74) Mandataire: **Jacobacci Coralis Harle**
 **32, rue de l'Arcade**
 **75008 Paris (FR)**

(56) Documents cités:
**WO-A1-95/32408        WO-A1-2004/058058**
**WO-A1-2004/081549     WO-A1-2008/042766**
**WO-A1-2010/024397     WO-A2-2008/052221**
**DE-A1- 19 829 944**

## Description

La présente invention concerne le domaine de la spectrométrie Raman.
Plus précisément, l'invention concerne un dispositif et un procédé de visualisation pour spectromètre Raman.

Depuis l'arrivée des sources laser, la spectroscopie Raman a connu un essor formidable et trouve aujourd'hui des applications dans des domaines très variés, allant de la recherche fondamentale à des applications industrielles de contrôle de procédé.

La spectroscopie Raman est basée sur la mesure de transitions entre des états vibrationnels d'une structure polyatomique, moléculaire ou ionique (et sur les états de rotations dans le cas de gaz), quel que soit l'état physique de l'échantillon (gaz, liquide, solide amorphe ou cristallin). Un échantillon éclairé par une source de lumière monochromatique (un laser) diffuse de la lumière qui n'est plus monochromatique mais présente des bandes de diffusion à différentes fréquences. Ainsi, le spectre obtenu est composé de trois sources de diffusion : les bandes Rayleigh (diffusion élastique), Stokes et Anti-Stokes (diffusion inélastique). Les fréquences Raman sont spécifiques pour chaque échantillon et sont indépendantes de la fréquence du laser. La spectroscopie Raman permet ainsi une analyse chimique non destructive de solides, liquides, poudres ou de gaz.

Plus récemment, la miniaturisation des composants optiques a permis de coupler la spectrométrie Raman à la microscopie optique standard pour permettre l'analyse d'échantillons avec une résolution spatiale micrométrique. Le faisceau laser d'excitation est généralement focalisé par un objectif ou une lentille optique. Différents appareils de spectrométrie Raman disposent d'un système de visualisation qui permet d'éclairer l'échantillon et de former une image de l'échantillon sur un écran. Un système de visualisation est généralement basé sur l'utilisation d'une source de lumière blanche (lampe classique), d'une caméra de visualisation et d'un composant optique escamotable, tel qu'une lame semi-transparente, sur le chemin optique de l'instrument de mesure. La mise en place du dispositif de visualisation permet d'effectuer la mise au point sur l'échantillon avant la mesure, par exemple grâce à un système autofocus. Dans un tel dispositif, pour effectuer une mesure de l'échantillon par spectrométrie Raman, il faut retirer le dispositif d'éclairage et de visualisation du chemin optique, par exemple en rétractant la lame semi-transparente hors du chemin optique. Cependant, un tel dispositif peut présenter des difficultés de manipulation. En effet, l'utilisation d'un composant optique escamotable suppose un mouvement mécanique qui entraîne un risque de bougé. De plus, le manque de reproductibilité du mouvement opto-mécanique peut produire une mise au point différente de l'échantillon vu par le système de visualisation et par le système de mesure Raman.

Dans certaines applications, il est souhaitable d'effectuer un suivi de l'échantillon en fonction du temps et il apparaît utile de pouvoir visualiser l'échantillon pendant une série de mesures Raman. Dans certaines applications particulières, il peut même être nécessaire d'effectuer ou d'ajuster la mise au point sur l'échantillon simultanément avec la mesure. Toutefois, l'utilisation d'un dispositif d'éclairage pendant la mesure Raman risque de perturber la mesure des signaux Raman. Premièrement, le laser d'excitation est susceptible de générer de la lumière parasite en direction de la caméra de visualisation, qui risque de saturer le capteur de la caméra et d'empêcher une visualisation correcte de l'échantillon. De plus, la présence permanente d'un composant optique supplémentaire, tel qu'une lame semi-transparente, sur le chemin optique entraîne nécessairement une baisse du signal Raman détecté. Enfin, la source d'éclairement est susceptible de générer de la lumière parasite par diffusion non seulement sur l'échantillon mais aussi sur les composants internes de l'appareil et ainsi de perturber la mesure des signaux Raman. Or la difficulté de mesure des signaux Raman provient essentiellement de la très faible intensité de la diffusion Raman comparée à l'intensité de la diffusion Rayleigh. Il n'est donc pas possible, avec les systèmes actuels, d'effectuer simultanément une mesure Raman et la visualisation d'un échantillon. Les documents de brevet WO2008052221, WO2004081549 et WO2010/024397 proposent de combiner un système de mesure de spectrométrie Raman ayant une source d'excitation dans le domaine proche infra-rouge avec un système d'imagerie basé sur un éclairage en lumière blanche.

Un des buts de l'invention est de fournir un dispositif et un procédé de visualisation et de spectrométrie Raman.

Un but de l'invention est de fournir un dispositif et un procédé permettant simultanément la visualisation et la mesure par spectrométrie Raman d'un échantillon. La présente invention a pour but de remédier à ces inconvénients et concerne plus particulièrement un dispositif optique de spectrométrie Raman et de visualisation d'un échantillon selon la revendication 1.

Selon différents aspects particuliers l'invention, lesdits moyens optiques de superposition comprennent :

- un filtre optique apte à réfléchir ledit faisceau laser d'excitation de bande spectrale $B_0$ et à transmettre ledit faisceau de visualisation de bande spectrale $B_V$ ;
- un filtre optique apte à transmettre ledit faisceau laser d'excitation de bande spectrale $B_0$ et à réfléchir ledit faisceau de visualisation de bande spectrale $B_V$;
- ledit premier moyen de filtrage comprend un filtre optique apte à réfléchir ledit premier faisceau secondaire et à transmettre ledit deuxième faisceau secondaire ;
- ledit premier moyen de filtrage comprend un filtre optique apte à transmettre ledit premier faisceau secondaire et à réfléchir ledit deuxième faisceau secondaire ;

- ledit deuxième moyen de filtrage comprend un filtre optique apte à réfléchir ledit premier faisceau tertiaire et à transmettre ledit deuxième faisceau tertiaire ;
- ledit deuxième moyen de filtrage comprend un filtre optique apte à transmettre ledit premier faisceau tertiaire et à réfléchir ledit deuxième faisceau tertiaire
- ledit filtre optique est choisi parmi un filtre passe-haut, passe-bas, passe-bande ou coupe-bande ;

Selon des aspects particuliers le dispositif de l'invention comporte en outre :

- des moyens de réglage d'autofocus, et/ou

- des moyens de stabilisation d'image couplés à des moyens de déplacement relatif de l'objet par rapport au faisceau d'excitation laser.

L'invention concerne aussi un procédé de spectrométrie Raman selon la revendication 11.

Cette description donnée à titre d'exemple non limitatif fera mieux comprendre comment l'invention peut être réalisée en référence aux dessins annexés sur lesquels :

- la figure 1 représente schématiquement une répartition spectrale de l'intensité du faisceau laser d'excitation, du faisceau d'éclairage et de visualisation et du faisceau de diffusion Raman ;
- la figure 2 représente schématiquement un exemple de réalisation d'un dispositif de l'invention illustrant le chemin optique des différents faisceaux incidents et diffusés ;
- La figure 3 représente un dispositif selon un mode de réalisation préféré de l'invention ;
- la figure 4 représente schématiquement les spectres en intensité des composants utilisés dans le dispositif de la figure 3 ;
- la figure 5 représente un premier cas de répartition des bandes spectrales; ce cas ne faisant pas partie de l'invention;
- les figures 6 à 9 représentent différents modes de réalisation, ne faisant pas partie de l'invention, utilisant la répartition des bandes spectrales de la figure 5 ;
- la figure 10 représente un deuxième cas de répartition des bandes spectrales, selon l'invention;
- les figures 11 à 18 représentent différents modes de réalisation de l'invention utilisant la répartition des bandes spectrales de la figure 10 ;
- la figure 19 représente un troisième cas de répartition des bandes spectrales; ce cas ne faisant pas partie de l'invention;
- les figures 20 à 23 représentent différents modes de réalisation, ne faisant pas partie de l'invention, utilisant la répartition des bandes spectrales de la figure 19 ;
- la figure 24 représente un quatrième cas de répartition des bandes spectrales; ce cas ne faisant pas partie de l'invention;
- les figures 25 à 28 représentent différents modes de réalisation, ne faisant pas partie de l'invention, utilisant la répartition des bandes spectrales de la figure 24.

L'invention propose un arrangement de filtres permettant de faire du Raman et la visualisation de l'échantillon sans parties mobiles et en simultané.

L'idée est d'utiliser une gamme spectrale spécifique pour l'éclairement et la visualisation de l'échantillon, cette gamme spectrale étant disjointe de celle du laser et de la plage Raman induite.

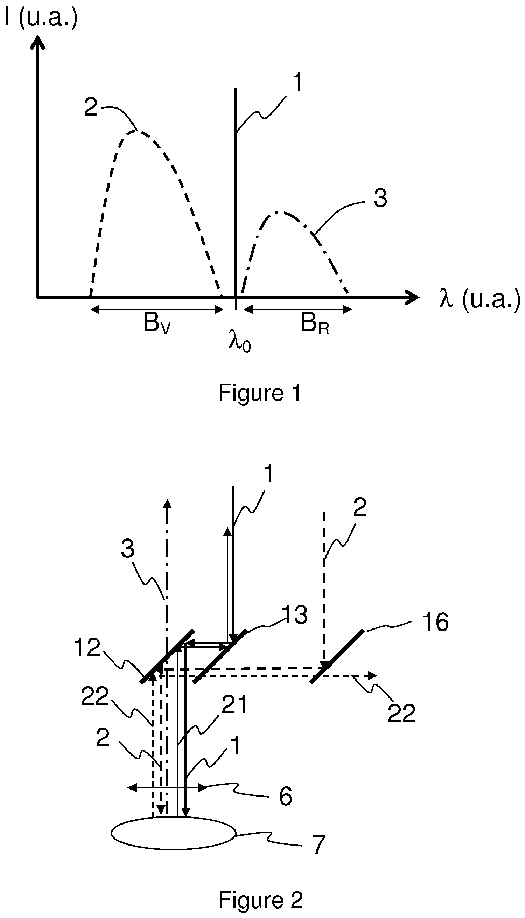

La figure 1 représente très schématiquement la répartition spectrale de l'intensité de différents faisceaux de mesure et de visualisation. Le faisceau laser d'excitation a une longueur d'onde $\lambda_0$ et une bande spectrale $B_0$ centrée sur la longueur d'onde $\lambda_0$, la bande spectrale $B_0$ étant très étroite. Le faisceau d'excitation (1) génère par diffusion Raman sur un échantillon un faisceau de diffusion Raman dont les raies sont situées dans une bande spectrale $B_R$ représentée schématiquement par la courbe (3) sur la figure 1.

Un aspect de l'invention consiste à utiliser un faisceau de visualisation ayant une bande spectrale $B_V$ distincte de la bande spectrale $B_0$ du laser et de la bande spectrale $B_R$ que l'on cherche à mesurer.

La figure 2 représente schématiquement un exemple de réalisation d'un dispositif selon un mode de réalisation de l'invention de manière à illustrer le chemin des différents faisceaux. Le dispositif de la figure 2 permet de superposer un faisceau incident laser et un faisceau incident d'éclairage et simultanément de séparer le faisceau diffusé par l'échantillon (7) et collecté par l'objectif (6) en fonction de ses différentes composantes spectrales, plus précisément en fonction des bandes spectrales $B_0$, $B_V$ et $B_R$. Le faisceau (21) est un faisceau de rétrodiffusion du laser d'excitation ayant une bande spectrale $B_0$ (diffusion Rayleigh). Le faisceau (3) est le faisceau de diffusion Raman qui a une composante spectrale $B_R$. Le faisceau de visualisation (22) est un faisceau de rétrodiffusion Rayleigh du faisceau d'éclairage (2) qui a une composante spectrale $B_V$. Le filtre (12) transmet le faisceau de diffusion Raman (3) et réfléchit les faisceaux de diffusion Rayleigh (21) et (22). Le filtre (13) transmet le faisceau de visualisation (22) diffusé par l'échantillon (7) et réfléchit le faisceau de diffusion Rayleigh à la longueur d'onde du laser. Une lame séparatrice (16) transmet le faisceau de visualisation (22) diffusé par l'échantillon par exemple en direction d'une caméra de visualisation (non représentée). Le faisceau Raman (3) peut être transmis en direction d'un spectromètre Raman afin de fournir la mesure des raies Raman dans la bande spectrale $B_R$. Le dispositif de la figure 2 permet ainsi de visualiser l'échantillon grâce au faisceau de visualisation (22) et simultanément d'effectuer une mesure Raman grâce au faisceau de diffusion Raman (3) qui est séparé des diffusions Rayleigh du faisceau laser et du faisceau d'éclairage.

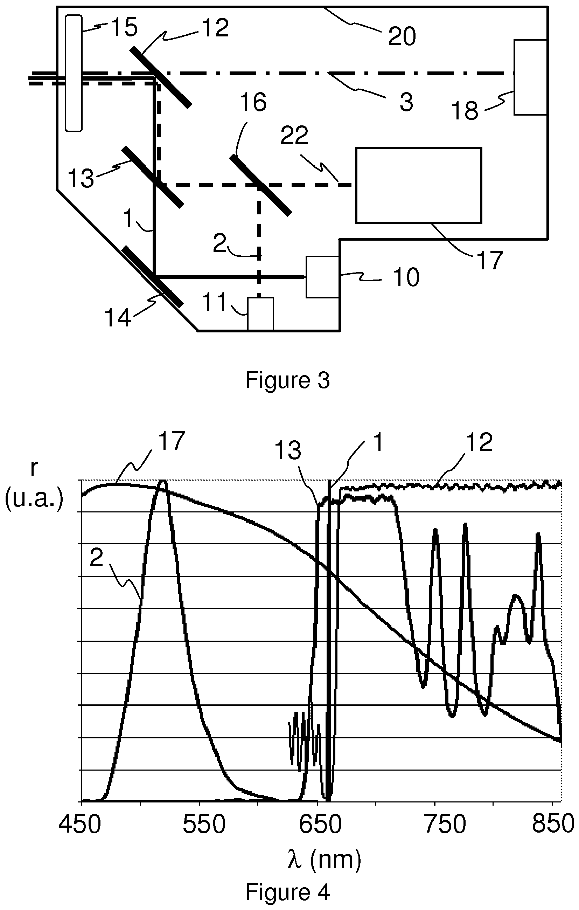

La figure 3 représente un dispositif selon un mode de réalisation préféré de l'invention. Le dispositif de la figure 3 peut être couplé directement à un spectromètre Raman ou déporté par rapport au spectromètre Raman pour être disposé au plus près de l'échantillon, le dispositif étant alors relié à un spectromètre Raman par des fibres optiques. Le boîtier (20) comprend une entrée (10) pour coupler un faisceau laser d'excitation et le diriger vers un premier miroir de renvoi (14). Le faisceau laser (1) est transmis par le filtre (13) puis réfléchi par le filtre (12) pour être transmis en direction de l'échantillon à travers le composant optique de focalisation (15). Le boîtier (20) comprend une source de visualisation (11) qui est par exemple une led verte émettant dans une gamme de longueur d'onde comprise entre 500 et 550 nm. La source de visualisation (11) génère un faisceau de visualisation (2) qui est dirigé vers une lame séparatrice (16), puis transmis en direction du filtre (13). Le filtre (13) réfléchit le faisceau (2) en direction du filtre (12) qui réfléchit également le faisceau de visualisation (2) en direction de l'échantillon, de manière à le superposer au faisceau d'excitation laser (1). Le faisceau de diffusion collecté à travers le hublot (15) comprend un faisceau de diffusion Raman (3) qui est transmis par le filtre (12) en direction d'un module (18) qui peut être soit un spectromètre Raman soit un connecteur de fibres de manière à transmettre le faisceau Raman (3) vers un spectromètre Raman déporté. Le faisceau diffusé par l'échantillon à la longueur d'onde $\lambda_0$ du laser est réfléchi par le filtre (12), transmis par le filtre (13) et redirigé vers l'entrée/sortie (10). Le faisceau collecté comprend également une composante dans la bande spectrale $B_V$ de la source de visualisation. Le faisceau rétrodiffusé de visualisation (22) est réfléchi par le filtre (12) et par le filtre (13) puis transmis par la lame séparatrice (16). Ce faisceau de visualisation (22) est dirigé vers une caméra de visualisation (17).

Un prototype de sonde déportée fibrée, basée sur le schéma de la figure 3 a été réalisé pour un laser d'excitation ayant une longueur d'onde $\lambda_0$ de 660nm, mais ce principe peut s'appliquer à tout appareil. Le filtre (12) réfléchit le laser (660nm), l'éclairage en basse longueur d'onde (inférieure à 660 nm) et la lumière réfléchie par l'échantillon. Le filtre (12) transmet le faisceau de diffusion Raman pour des longueurs d'ondes à partir de 665 nm, la gamme Raman s'étendant en nombre d'onde entre 400 et 3500 cm$^{-1}$. Le filtre (13) transmet le laser d'excitation à 660nm et réfléchit le faisceau d'éclairage à basse longueur d'onde. La lame séparatrice (16) permet de séparer le faisceau d'éclairage (2) qui va de la source d'éclairage vers l'échantillon du faisceau de visualisation (22) qui va de l'échantillon vers une caméra de visualisation. Le dispositif de la figure 3 est compatible avec un système vidéo confocal. Le laser d'excitation est couplé au connecteur d'entrée (10) via une fibre optique de diamètre de cœur 5-6 microns. La sonde est reliée à un spectromètre Raman via fibre optique ayant un diamètre de cœur d'environ 100 microns. La source d'éclairage est une LED verte d'ouverture 15° et dont l'intensité lumineuse est environ de 6800 mcd.

La figure 4 représente schématiquement la réponse spectrale relative des différentes sources et des filtres utilisés. Le faisceau laser (1) a une longueur d'onde $\lambda_0$ et une bande spectrale $B_0$ très étroite. On observe la courbe (2) correspondant à la courbe spectrale d'émission de la source de visualisation (11). La courbe de détection spectrale de la caméra de visualisation (17) présente un spectre très large avec une sensibilité maximum autour de la bande spectrale $B_V$ de la source de visualisation. Le filtre (12) est un filtre passe-haut ayant une longueur d'onde de coupure située juste au-dessus de la longueur d'onde $\lambda_0$ du laser tandis que le filtre (13) laisse passer la longueur d'onde du laser et réfléchit les longueurs d'onde dans la bande spectrale $B_V$ de visualisation.

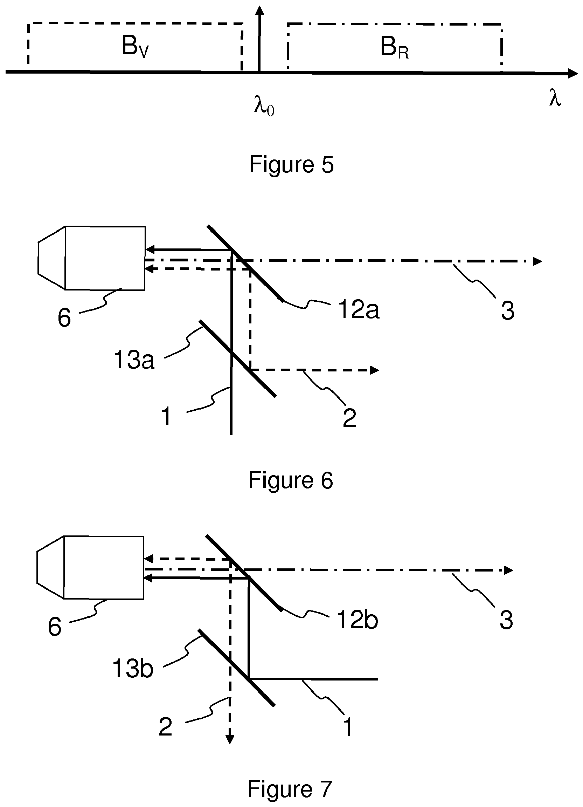

Les figures 1 à 4 décrivent le principe de l'invention en lien avec un mode de réalisation particulier de l'invention. Toutefois de nombreuses variantes reposant sur le même principe sont valables et vont être développées dans les exemples détaillés dans les figures 5 à 28 en fonction des positions respectives des différentes bandes spectrales de visualisation $B_V$, d'excitation laser $B_0$ et de diffusion Raman $B_R$.

La figure 5 représente schématiquement un premier cas, ne faisant pas partie de l'invention, selon lequel la longueur d'onde $\lambda_0$ d'excitation définit une bande spectrale $B_0$. On cherche à mesurer des raies de diffusion Raman dans la bande spectrale $B_R$ correspondant aux raies Stokes c'est-à-dire ayant des longueurs d'onde supérieures à la longueur d'onde d'excitation du laser $\lambda_0$. La bande spectrale de visualisation $B_V$ est située à des longueurs d'onde inférieures à la longueur d'onde d'excitation $\lambda_0$. Par exemple, le laser peut avoir une longueur d'onde de 660 nm et la visualisation peut être effectuée dans le domaine bleu-vert-jaune du spectre visible.

Sur les figures 6 à 9, on a représenté le faisceau laser d'excitation (1) en trait plein et le faisceau de diffusion Raman (3) Stokes en trait tiret-point. Dans la suite du document on a représenté par une ligne commune en tirets (2) le faisceau d'éclairage incident sur l'échantillon et le faisceau de visualisation diffusé par l'échantillon, qui sont superposés sur le trajet aller et retour jusqu'à une lame séparatrice (16) non représentée.

La figure 6 représente un premier mode de réalisation, ne faisant pas partie de l'invention, utilisant la répartition des bandes spectrales de la figure 5. Le faisceau d'excitation laser (1) est transmis par un filtre (13a) puis réfléchi par un filtre (12a) en direction d'un objectif (6) de focalisation. Le faisceau de visualisation (2) est réfléchi par le filtre (13a) puis par le filtre (12a) en direction de l'objectif (6). Le faisceau collecté comprend le faisceau de diffusion Raman (3) qui est transmis par le filtre (12a). Le faisceau diffusé collecté comprend également un faisceau de visualisation qui est réfléchi par le filtre (12a) puis par le filtre (13a). Le filtre (13a) est un filtre passe-haut ou passe-bande ayant une longueur d'onde de coupure située entre la bande de visualisation $B_V$ et la bande $B_0$ du laser. Le filtre (12a) est un filtre passe-haut ayant une longueur d'onde de coupure située entre la longueur d'onde $\lambda_0$ du laser et la bande $B_R$ de diffusion Raman. Le filtre (13a) sert donc à superposer le faisceau d'excitation laser et le faisceau d'éclairage en direction de l'échantillon et sur le faisceau de diffusion à séparer le faisceau de visualisation de la rétrodiffusion à la longueur d'onde du laser. Le filtre (12a) sert à séparer d'une part le faisceau de la diffusion Raman (3) et d'autre part les composantes spectrales du faisceau de diffusion dans la bande spectrale $B_0$ du laser et dans la bande spectrale $B_V$ du faisceau de visualisation.

La figure 7 représente un deuxième mode de réalisation d'un dispositif, ne faisant pas partie de l'invention, utilisant toujours la répartition spectrale selon le schéma de la figure 5. A la différence de la figure 6, le faisceau laser (1) est premièrement réfléchi par un filtre (13b) avant d'être réfléchi sur un filtre (12b). Symétriquement le faisceau d'éclairage (2) est transmis par le filtre (13b) avant d'être réfléchi par le filtre (12b). Le faisceau diffusé et collecté est dirigé vers le premier filtre (12b) qui transmet le faisceau de diffusion Raman (3) et réfléchit les composantes du faisceau diffusé dans la bande spectrale $B_0$ du laser et dans la bande spectrale $B_V$ du faisceau de visualisation 2. Le filtre (13b) sépare le faisceau de visualisation diffusé du faisceau diffusé à la longueur d'onde du laser. Comme dans la figure 6, le filtre (12b) est un filtre passe-haut ayant une longueur d'onde de coupure située entre la longueur d'onde $\lambda_0$ du laser et la bande spectrale Raman $B_R$. Le filtre (13b) est un filtre passe-bas ou coupe-bande ayant une longueur d'onde de coupure située entre la bande spectrale de visualisation $B_V$ et la bande spectrale $B_0$ qui transmet le faisceau dans la bande spectrale $B_V$ et réfléchit un faisceau ayant des longueurs d'onde dans la bande spectrale $B_0$.

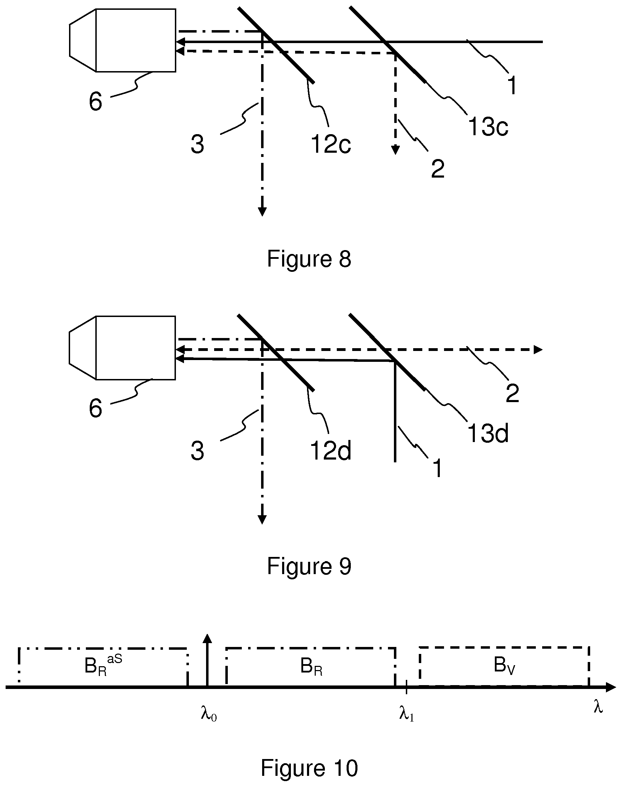

La figure 8 représente schématiquement un troisième mode de réalisation, ne faisant pas partie de l'invention, basé sur la répartition spectrale du schéma de la figure 5. Le faisceau laser d'excitation (1) est transmis par un filtre (13c) puis par un filtre (12c) en direction de l'objectif (6). Le faisceau d'éclairage (2) est réfléchi sur le filtre (13c) et transmis par le filtre (12c). Le faisceau de diffusion Raman (3) est réfléchi par le filtre (12c). Le faisceau de diffusion (2) dans la bande spectrale de visualisation $B_V$ est transmis par le filtre (12c) et réfléchi par le filtre (13c). Le filtre (13c) est un filtre passe-haut ou passe-bande ayant une longueur d'onde de coupure située entre la bande spectrale $B_V$ et la bande $B_0$ qui transmet la bande $B_0$ et réfléchit la bande $B_V$. Le filtre (12c) est un filtre passe-bas ayant une longueur d'onde de coupure comprise entre la bande $B_0$, et la bande Raman $B_R$ qui transmet la longueur d'onde de la bande spectrale $B_V$ et de la bande spectrale $B_0$ et réfléchit un faisceau ayant des longueurs d'onde dans la bande spectrale $B_R$.

La figure 9 représente un quatrième mode de réalisation, ne faisant pas partie de l'invention, suivant la répartition spectrale du schéma de la figure 5. Le dispositif comprend un filtre (12d), un filtre (13d) et un objectif (6). Le faisceau laser d'excitation (1) est réfléchi sur le filtre (13d) puis transmis par le filtre (12d) en direction de l'objectif (6). Le faisceau d'éclairage et de visualisation (2) est transmis par le filtre (13d) et le filtre (12d). Le faisceau de diffusion Raman (3) collecté est réfléchi par le filtre (12d) tandis que le faisceau de diffusion dans la bande spectrale $B_V$ du faisceau de visualisation est transmis par le filtre (12d) et par ledit filtre (13d). Le filtre (13d) est un filtre passe-bas ou coupe bande ayant une longueur d'onde de coupure située entre la bande de visualisation $B_V$ et la bande $B_0$ du laser qui transmet la bande de visualisation $B_V$ et réfléchit la bande $B_0$. Le filtre (12d) est un filtre passe-bas qui transmet les bandes $B_0$ et $B_V$ et réfléchit la bande de diffusion Raman $B_R$. Le filtre (12d) a une longueur d'onde de coupure comprise entre la bande $B_0$ et la bande $B_R$.

La figure 10 représente un cas de répartition des bandes spectrales selon l'invention : la bande spectrale d'excitation laser, les bandes de mesure Raman Stokes (bande spectrale $B_R$) et Raman anti-Stokes (bande spectrale $B_R^{aS}$) et la bande de visualisation Bv.

Par exemple, la longueur d'onde $\lambda_0$ du laser d'excitation est située à 473nm tandis que la bande spectrale de visualisation $B_V$ est située dans la partie jaune-rouge du spectre visible, par exemple dans une gamme de longueurs d'onde au dessus de 600 nm.

La bande Raman Stokes est située à des longueurs d'ondes supérieures à la longueur d'onde $\lambda_0$ d'excitation laser et inférieures à une longueur d'onde $\lambda_1$ elle-même inférieure à la bande de visualisation $B_V$.

La bande de diffusion Raman Anti-Stokes est située à des longueurs d'ondes inférieures à la longueur d'onde $\lambda_0$ d'excitation laser.

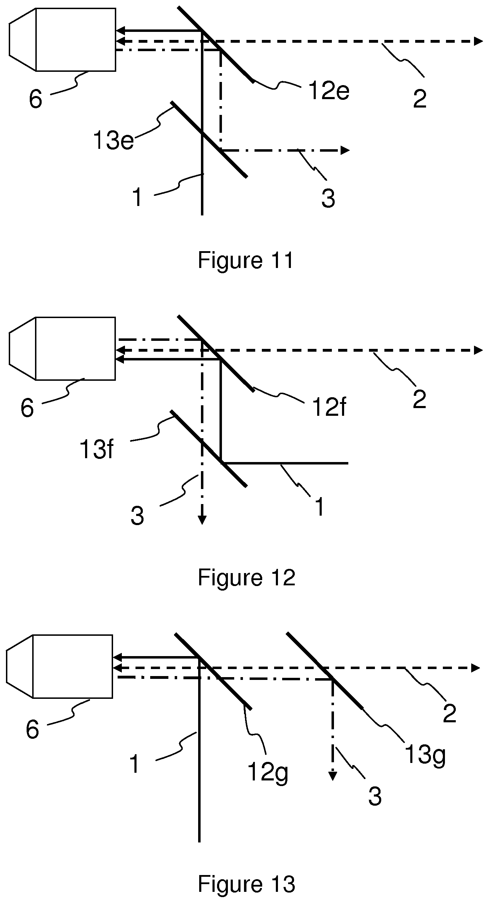

Les configurations illustrées sur les figures 11, 12, 13, 14, 17 et 18 permettent d'effectuer soit des mesures Raman Stokes seules soit des mesures simultanées Raman Stokes et anti-Stokes comme détaillé plus loin.

La figure 11 représente un premier mode de réalisation suivant la répartition spectrale de la figure 10.

Nous allons d'abord décrire le mode de réalisation de la figure 11 pour la mesure des raies Stokes seuls puis pour la mesure des raies Stokes et Anti-Stokes.

• Configuration de la figure 11 pour le mode Stokes

Le faisceau laser d'excitation (1) est transmis par un filtre (13e) et réfléchi par un filtre (12e). Le faisceau d'éclairage et de visualisation (2) est transmis par le filtre (12e) qui retransmet le faisceau diffusé dans la bande de visualisation $B_V$.

Le filtre (12e) réfléchit le faisceau de diffusion Raman (3). Le filtre (13e) réfléchit le faisceau de diffusion Raman (3).

Dans la configuration Stokes, le filtre (13e) est un filtre passe-bas qui transmet la bande $B_0$ et réfléchit la bande $B_R$ qui a donc une longueur d'onde de coupure située entre la bande $B_0$ et la bande $B_R$.

Le filtre (12e) est un filtre passe-haut qui transmet la bande de visualisation $B_V$ et réfléchit les bandes spectrales $B_0$ et $B_R$.

Le filtre (12e) est un filtre ayant une longueur d'onde de coupure comprise entre la bande Raman $B_R$ et la bande de visualisation $B_V$.

• Configuration de la figure 11 pour le mode Stokes et anti-Stokes

Dans la configuration de la figure 11 où l'on cherche à mesurer à la fois les raies Stokes et Anti-Stokes, le filtre (13e) est un filtre passe-bande qui transmet la bande $B_0$ et réfléchit les bandes Raman $B_R$ Stokes et la bande Raman Anti-Stokes $B_R^{aS}$

• Configuration de la figure 12

La figure 12 représente schématiquement un second mode de réalisation basé sur la répartition spectrale du schéma de la figure 10. Le dispositif de la figure 12 comprend un filtre (13f) qui réfléchit le faisceau d'excitation au laser (1). Le faisceau d'éclairage et de visualisation (2) est transmis par le filtre (12f) qui réfléchit le faisceau Raman diffusé (3) et transmet la partie du faisceau diffusé dans la bande de visualisation $B_V$. Le filtre (13f) sépare le faisceau Raman (3) du faisceau diffusé Rayleigh à la longueur d'onde du laser. Le filtre (12f) est un filtre passe-haut qui transmet la bande de visualisation $B_V$ et réfléchit les bandes spectrales $B_0$ et $B_R$ et a une longueur d'onde de coupure située entre $B_R$ et $B_V$.

Le filtre (13f) transmet la bande spectrale de diffusion Raman $B_R$ et réfléchit la bande $B_0$ du laser. Dans le cas où on cherche uniquement à mesurer la bande de diffusion Raman Stokes le filtre (13f) est un filtre passe-haut ayant une longueur d'onde de coupure située entre les bandes spectrales $B_0$ et $B_R$. Dans le cas où on cherche à mesurer simultanément les raies de diffusion Raman Stokes et anti-Stokes, le filtre (13f) est un filtre coupe-bande qui réfléchit la bande spectrale $B_0$ du faisceau d'excitation et transmet les bandes de diffusion Raman $B_R$ Stokes et Anti-Stokes $B_R^{aS}$.

La figure 13 représente un troisième mode de réalisation suivant la répartition spectrale de la figure 10.

Le filtre (12g) superpose le faisceau d'excitation laser (1) et le faisceau d'éclairage et de visualisation (2) en réfléchissant le faisceau laser (1) et en transmettant le faisceau d'éclairage et de visualisation (2) dans la bande spectrale $B_V$. Le filtre (12g) transmet le faisceau de visualisation dans la bande spectrale $B_V$ et le faisceau de diffusion Raman (3) et réfléchit le faisceau de diffusion Rayleigh dans la bande spectrale $B_0$.

Le filtre (13g) transmet le faisceau de visualisation (2) dans la bande spectrale $B_V$ et réfléchit le faisceau de diffusion Raman (3). Le filtre (13g) est un filtre passe-haut ayant une longueur d'onde de coupure située entre la bande spectrale Raman $B_R$ et la bande de visualisation $B_V$ de manière à transmettre la bande de visualisation $B_V$ et à réfléchir la bande spectrale $B_R$.

Dans le cas où on souhaite mesurer uniquement la bande spectrale Raman des raies Stokes, le filtre (12g) est un filtre passe-haut qui transmet la bande spectrale $B_R$, la bande spectrale $B_V$ et réfléchit la bande spectrale $B_0$.

Dans le cas où on souhaite mesurer à la fois les raies Stokes et Anti-Stokes, le filtre (12g) est un filtre coupe-bande qui réfléchit la bande spectrale $B_0$, transmet la bande spectrale Raman anti-Stokes, la bande spectrale Raman Stokes et la bande spectrale de visualisation $B_V$.

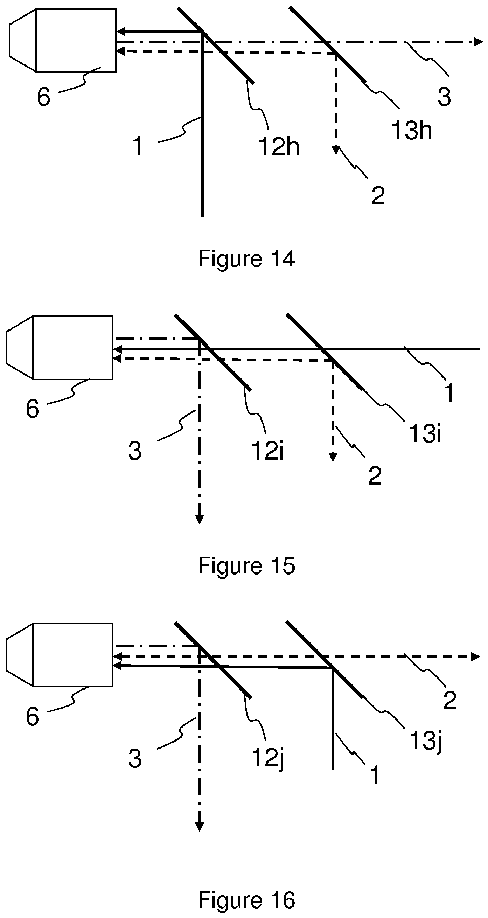

La figure 14 représente un quatrième mode de réalisation suivant la répartition spectrale de la figure 10.

Le filtre (12h) permet de superposer le faisceau laser d'excitation (1) et le faisceau d'éclairage et de visualisation (2) en direction de l'échantillon.

Sur le faisceau collecté diffusé le filtre (12h) réfléchit le signal diffusé par diffusion Rayleigh dans la bande spectrale $B_0$, transmet le faisceau de visualisation dans la bande spectrale $B_V$ et le faisceau de diffusion Rayleigh dans la bande spectrale $B_R$ ou $B_R^{as}$.

Le filtre (13h) est un filtre passe-bas qui transmet la bande de diffusion Raman $B_R$ et réfléchit la bande spectrale de visualisation $B_V$.

Dans le cas d'une mesure de raies Stokes uniquement, le filtre (12h) est un filtre passe-haut ayant une longueur d'onde de coupure comprise entre la bande spectrale $B_0$ et la bande spectrale $B_R$ de manière à réfléchir la bande spectrale $B_0$ et à transmettre les bandes spectrales $B_R$ et $B_V$.

Dans le cas où l'on souhaite mesurer les raies Stokes et les raies Anti-Stokes, le filtre (12h) est un filtre coupe-bande qui réfléchit la bande spectrale $B_0$ et transmet les bandes spectrales $B_R$ Stokes $B_R^{aS}$ anti-Stokes ainsi que les raies de la bande spectrale de visualisation $B_V$.

La figure 15 représente un cinquième mode de réalisation pour une mesure des raies Raman Stokes suivant la répartition de la figure 10.

Le filtre (13i) permet de superposer le faisceau laser d'excitation (1) et le faisceau d'éclairage et de visualisation (2) en direction de l'objet 6 et de l'échantillon.

Le filtre (12i) transmet à la fois le faisceau d'excitation laser (1) et le faisceau de visualisation (2).

Sur le faisceau de diffusion collecté, le filtre (12i) sépare le faisceau de diffusion Raman (3) du faisceau de visualisation (2). Le filtre (13i) réfléchit le faisceau de visualisation (2) et transmet le faisceau diffusé Rayleigh à la longueur d'onde du laser.

Le filtre (13i) est un filtre passe-bas qui transmet la bande $B_0$ et réfléchit la bande Bv.

Le filtre (12i) est un filtre coupe-bande large qui transmet la bande $B_0$, réfléchit la bande Raman $B_R$ et transmet la bande de visualisation $B_V$.

La figure 16 représente un autre mode de réalisation pour la mesure des raies Raman Stokes seules, suivant la répartition spectrale de la fig. 10.

Le dispositif de la figure 16 comprend un filtre (13j) qui permet de superposer le faisceau laser d'excitation (1) et le faisceau de visualisation en réfléchissant le faisceau laser dans la bande spectrale $B_0$ et en transmettant le faisceau de visualisation dans la bande spectrale $B_V$.

Le filtre 12j transmet simultanément le faisceau d'excitation et de d'éclairage et visualisation (2).

Le filtre (12j) réfléchit le faisceau de diffusion Raman (3) dans la bande spectrale $B_R$ et transmet le faisceau de diffusion Rayleigh à la longueur d'onde du laser dans la bande spectrale $B_0$ ainsi que le faisceau de visualisation (2) diffusé par l'échantillon dans la bande spectrale $B_V$.

Le filtre (13j) sépare le faisceau de visualisation (2) dans la bande spectrale $B_V$ du faisceau de diffusion Rayleigh dans la bande spectrale $B_0$.

Le filtre (12j) est un filtre coupe-bande large qui transmet la bande spectrale $B_0$ réfléchit la bande spectrale Raman $B_R$ et transmet la bande de visualisation $B_V$.

Le filtre (13j) est un filtre passe-haut ayant une longueur d'onde de coupure comprise entre la bande spectrale $B_0$ et la bande de visualisation $B_V$.

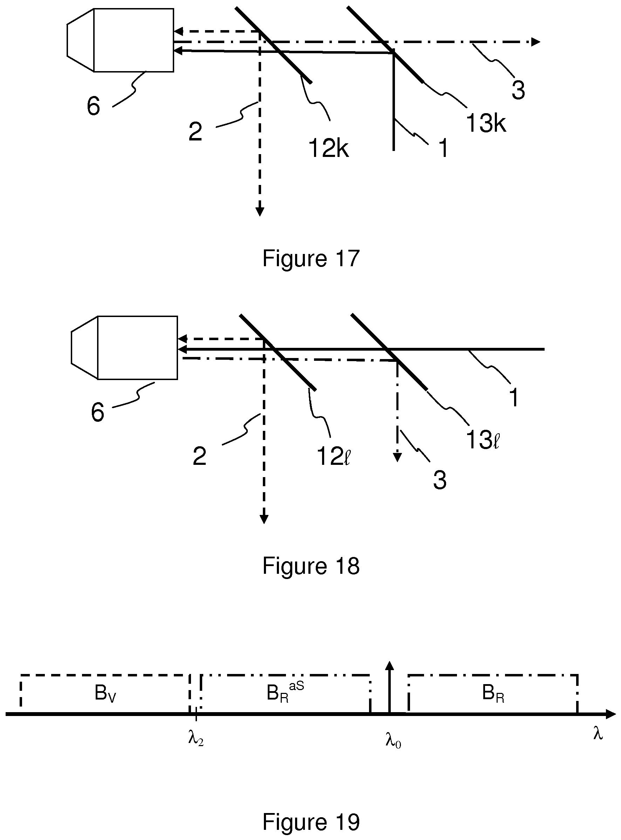

La figure 17 représente un autre mode de réalisation en lien avec la distribution spectrale du schéma de la figure 10. Le dispositif comprend un filtre (12k) qui permet de superposer le faisceau d'excitation laser (1) et le faisceau de visualisation (2) en transmettant le faisceau dans la bande spectrale $B_0$ et en réfléchissant le faisceau dans la bande spectrale $B_V$.

Le faisceau de diffusion collecté comprend une composante spectrale dans la bande de visualisation $B_V$ qui est réfléchie par le filtre (12k). Le filtre (12k) est un filtre passe-bas qui transmet la bande spectrale $B_0$ et la bande spectrale de diffusion Raman $B_R$ et qui réfléchit la bande spectrale $B_V$.

Le filtre (13k) transmet le faisceau de diffusion Raman (3) dans la bande spectrale Raman et réfléchit le faisceau de diffusion Rayleigh dans la bande spectrale $B_0$. Pour la mesure des raies Stokes le filtre (13k) peut être un filtre passe-haut ayant une longueur d'onde de coupure située entre la bande spectrale $B_0$ et la bande spectrale Raman Stokes $B_R$. Pour la mesure simultanée des raies Stokes et Anti-Stokes le filtre (13k) est un filtre coupe-bande qui réfléchit la bande spectrale $B_0$ et transmet les bandes spectrales de diffusion Raman Stokes $B_R$ et Anti-Stokes $B_R^{aS}$.

La figure 18 représente un autre mode de réalisation pour une distribution spectrale suivant le chemin de la figure 10.

Le dispositif comprend un filtre (12ℓ) qui permet de superposer le faisceau d'excitation laser et le faisceau de visualisation (2) en transmettant le faisceau d'excitation laser (1) et en réfléchissant le faisceau de visualisation (2).

Sur le faisceau de diffusion, le filtre (12ℓ) permet d'extraire le faisceau de visualisation dans la bande spectrale de visualisation $B_V$ et transmet le signal de diffusion Raman dans la bande $B_R$ ainsi que le signal de diffusion Rayleigh dans la bande spectrale $B_0$. Le filtre (12ℓ) est un filtre passe-bas qui transmet la bande $B_0$ et la bande $B_R$ et réfléchit la bande $B_V$ et a donc une longueur d'onde de coupure située au dessus de la longueur d'onde $\lambda_0$ entre la bande Raman $B_R$ et la bande spectrale $B_V$ de visualisation.

Le filtre (13ℓ) réfléchit le signal de diffusion Raman et transmet le signal de diffusion Rayleigh dans la bande spectrale $B_0$. Pour la mesure des raies Raman Stokes uniquement, le filtre (13ℓ) est un filtre passe-bas qui transmet la bande spectrale $B_0$ et réfléchit la bande spectrale Raman $B_R$. Dans le cas où on souhaite mesurer simultanément les raies de diffusion Raman Stokes et Anti-Stokes, le filtre (13ℓ) est un filtre passe-bande qui transmet uniquement la bande spectrale $B_0$ et qui réfléchit les bandes spectrales de diffusion Raman Stokes $B_R$ et Anti-Stokes $B_R^{aS}$

La figure 19 représente un autre cas de répartition spectrale des bandes de visualisation d'excitation laser dans le cas où on mesure les raies Raman anti-Stokes et Stokes; ce cas ne faisant pas partie de l'invention.

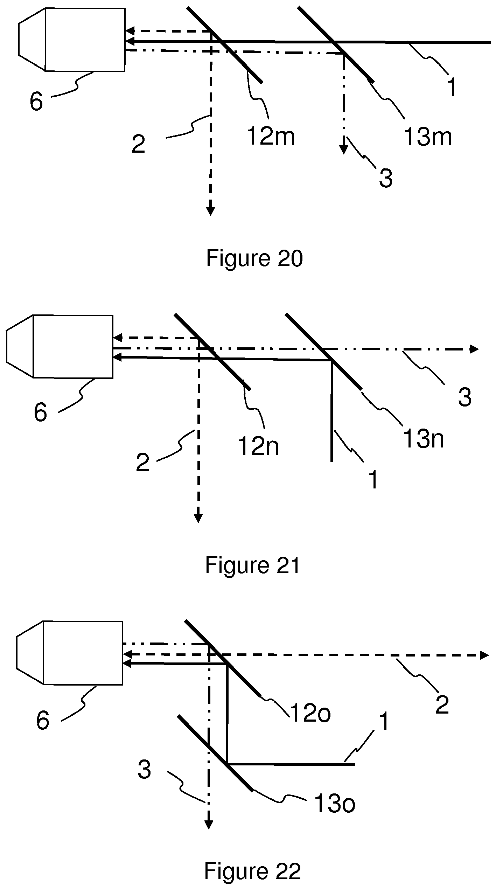

La bande de visualisation $B_V$ est ici située à des longueurs d'onde inférieures à la bande de diffusion de raies Raman Anti-Stokes $B_R^{aS}$. Les configurations décrites en lien avec les figures 20 à 23, ne faisant pas partie de l'invention, permettent d'effectuer des mesures soit de raies Raman Stokes seules soit simultanément de raies Raman Stokes et Anti-Stokes.

A la figure 20, le filtre (12m) permet de superposer le faisceau laser d'excitation (1) et le faisceau de visualisation (2). Le faisceau d'excitation (1) étant transmis et le faisceau de visualisation (2) étant réfléchi par le filtre (12m). Sur le faisceau diffusé le filtre (12m) permet d'extraire un faisceau diffusé dans la bande de visualisation $B_V$ et de transmettre le faisceau de diffusion Raman (3) ainsi que le faisceau de diffusion Rayleigh dans la bande spectrale $B_0$. Le filtre (12m) est un filtre passe-haut ayant une longueur d'onde de coupure située entre la bande de visualisation $B_V$ et la bande de diffusion Raman anti-Stokes. Le filtre (12m) transmet les signaux dans les bandes $B_0$, $B_R^{aS}$ et éventuellement $B_R$ Stokes et réfléchit la bande de visualisation $B_V$. Dans le cas où l'on souhaiterait mesurer uniquement les raies anti-Stokes, le filtre (13m) est un filtre passe-haut qui transmet la bande spectrale $B_0$ et réfléchit la bande spectrale de diffusion Raman anti-Stokes. Dans le cas où l'on souhaite mesurer simultanément les raies Stokes et anti-Stokes, le filtre (13m) est un filtre passe-bande qui transmet la bande spectrale $B_0$ et réfléchit les bandes de diffusion Raman Stokes et anti-Stokes.

La figure 21 représente un autre mode de réalisation, ne faisant pas partie de l'invention, correspondant à la distribution représentée schématiquement sur la figure 19. Le dispositif comprend un filtre (12n) et un filtre (13n). Le filtre (12n) permet de superposer le faisceau laser d'excitation (1) et le faisceau de visualisation (2) en réfléchissant le faisceau (2) et en transmettant le faisceau (1). Sur le faisceau collecté de diffusion, le filtre (12n) permet d'extraire le faisceau diffusé dans la bande de visualisation $B_V$ et de transmettre les faisceaux diffusés dans la bande $B_0$ ainsi que dans la bande de diffusion Raman. Le filtre (13n) permet de séparer le faisceau diffusé dans la bande spectrale $B_0$ du laser d'excitation du faisceau de diffusion Raman (3). Le filtre (12n) est un filtre passe-haut qui transmet les bandes spectrales $B_0$ et $B_R^{aS}$ (Raman anti-Stokes) et qui réfléchit la bande spectrale de visualisation $B_V$ Dans le cas où l'on souhaite mesurer uniquement les raies Anti-Stokes, le filtre (13n) est un filtre passe-bas qui transmet la bande de diffusion anti-Stokes $B_R^{aS}$ et réfléchit la bande spectrale $B_0$. Dans le cas où l'on souhaite mesurer à la fois les raies Raman Stokes et anti-Stokes, le filtre (13n) est un filtre coupe-bande qui est réfléchit la bande spectrale $B_0$ et transmet les bandes de diffusion Raman Stokes $B_R$ et Anti-Stokes $B_R^{aS}$.

La figure 22 représente encore un autre mode de réalisation, ne faisant pas partie de l'invention, selon le schéma de la figure 19 dans lequel un filtre (12o) permet de superposer le faisceau laser d'excitation (1) et le faisceau d'éclairage et de visualisation (2) en réfléchissant le faisceau laser (1) et en transmettant le faisceau d'éclairage et de visualisation (2) dans la bande spectrale $B_V$. Sur le faisceau de diffusion, le filtre (12o) transmet le faisceau diffusé dans la bande de visualisation $B_V$ et réfléchit le faisceau diffusé dans les bandes de diffusion Raman et dans la bande diffusion Rayleigh $B_0$. Le filtre (12o) est un filtre passe-bas qui transmet la bande de visualisation $B_V$ et réfléchit les bandes de diffusion $B_R$ Anti-Stokes, la bande $B_0$ et éventuellement la bande de diffusion Raman stokes. Le filtre (13o) transmet le faisceau diffusé dans les bandes spectrales Raman et réfléchit le faisceau Rayleigh diffusé dans la bande spectrale $B_0$ du laser. Dans le cas où l'on souhaite mesurer uniquement la bande anti-Stokes, le filtre (13o) est un filtre passe-bas qui transmet la bande de diffusion Raman anti-Stokes et réfléchit la bande spectrale $B_0$. Dans le cas où l'on souhaite mesurer simultanément les raies Stokes et anti-Stokes, le filtre (13o) est un filtre coupe-bande qui réfléchit la bande spectrale $B_0$ et transmet les bandes de diffusion Raman stokes $B_R$ et Anti-Stokes $B_R^{aS}$.

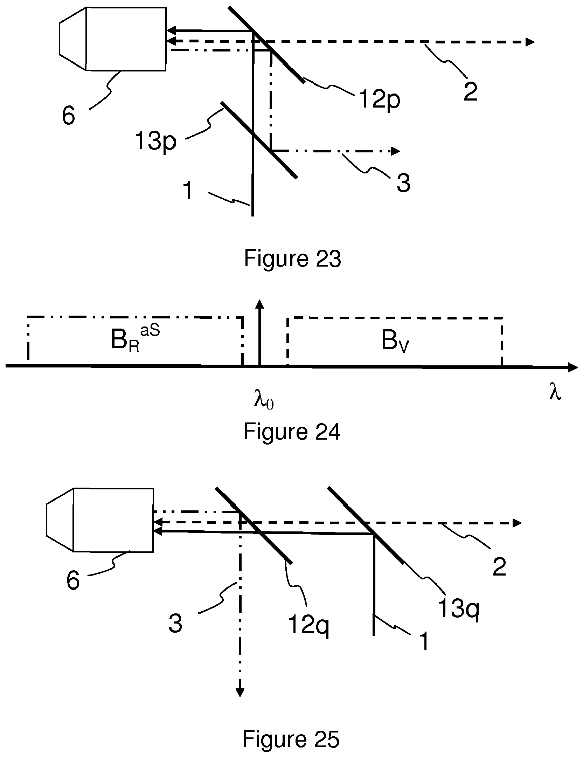

La figure 23 décrit un quatrième mode de réalisation, ne faisant pas partie de l'invention, en lien avec la distribution spectrale de la figure 19. Le filtre (12p) permet de superposer le faisceau laser d'excitation (1) et le faisceau d'éclairage et de visualisation (2) en réfléchissant le faisceau laser et en transmettant le faisceau de d'éclairage et visualisation dans la bande spectrale $B_V$. Sur le faisceau diffusé collecté, le filtre (12p) transmet le faisceau de visualisation (2) dans la bande spectrale $B_V$ et réfléchit les signaux de diffusion Raman dans la bande spectrale $B_R$ et le faisceau diffusé par diffusion Rayleigh dans la bande spectrale $B_0$ Le filtre (12p) permet ainsi d'extraire le faisceau de visualisation (2). Le filtre (13p) permet de séparer le faisceau de diffusion Rayleigh dans la bande spectrale $B_0$ et le faisceau de diffusion Raman (3). Le filtre (12p) est un filtre passe-bas qui transmet la bande de visualisation $B_V$ réfléchit la bande de diffusion Raman Anti-Stokes et la bande spectrale $B_0$. Dans le cas où l'on souhaite mesurer uniquement les raies Anti-Stokes, le filtre (13p) est un filtre passe-haut qui transmet la bande spectrale $B_0$ et réfléchit la bande de diffusion Raman Anti-Stokes $B_R^{aS}$ Dans le cas où l'on souhaite mesurer simultanément les raies Stokes et anti-Stokes, le filtre (13p) est un filtre passe-bande qui transmet la bande spectrale $B_0$ et réfléchit la bande de diffusion Raman stokes $B_R$ et anti-Stokes $B_R^{aS}$

La figure 24 représente un quatrième cas, ne faisant pas partie de l'invention, où l'on souhaite mesurer uniquement la diffusion des raies Raman anti-Stokes et où la bande spectrale de visualisation $B_V$ est situé au-dessus de la bande $B_0$ du laser d'excitation.

Les figures 25 à 28 représentent différents modes de réalisation, ne faisant pas partie de l'invention, suivant la répartition spectrale de la figure 24.

Sur la figure 25, un filtre (13q) permet de superposer le faisceau d'excitation qui est réfléchi par le filtre (13q) et un faisceau de visualisation (2) transmis par ce filtre. Sur le faisceau de diffusion, un filtre (12q) réfléchit le faisceau diffusé dans la bande Raman anti-Stokes et transmet le faisceau diffusé dans la bande de visualisation et dans la bande spectrale $B_0$. Le filtre (13q) permet de transmettre le signal diffusé dans la bande de visualisation $B_V$ et de réfléchir le faisceau de diffusion Rayleigh dans la bande spectrale $B_0$. Le filtre (12q) est un filtre passe-haut ayant une longueur d'onde de coupure comprise située entre la bande spectrale Raman Anti-Stokes $B_R^{aS}$ et la bande spectrale $B_0$ qui transmet donc les bandes spectrales $B_0$ et $B_V$ de visualisation et réfléchit la bande spectrale Raman Anti-Stokes. Le filtre (13q) est un filtre passe-haut ou coupe-bande ayant une longueur d'onde de coupure située entre la bande de visualisation et la bande $B_0$ qui transmet la bande spectrale $B_V$ et réfléchit la bande spectrale $B_0$.

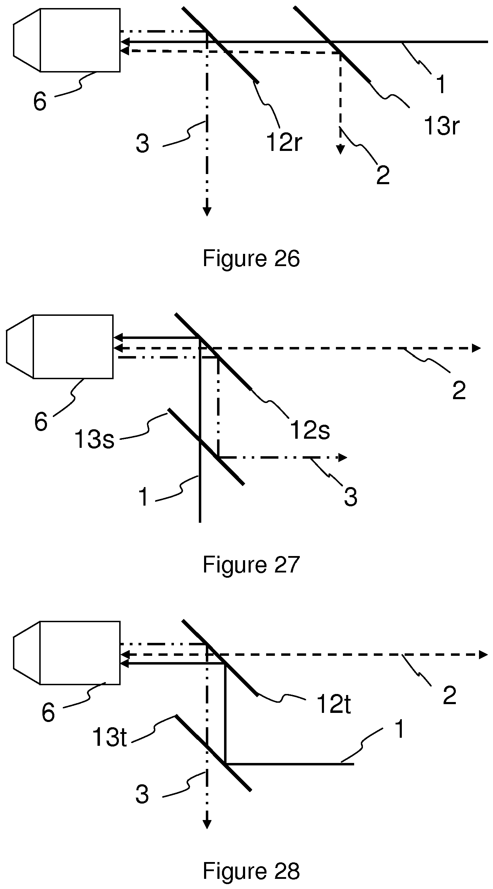

La figure 26 décrit un deuxième mode de réalisation, ne faisant pas partie de l'invention, en lien avec la distribution spectrale de la figure 24. Le filtre (13r) permet de superposer le faisceau laser d'excitation (1) transmis et le faisceau d'éclairage et de visualisation (2) qui est réfléchi par le filtre (13r). Le filtre (12r) transmet le faisceau combiné d'excitation et de visualisation. Sur le faisceau diffusé, le filtre (12r) réfléchit le faisceau de diffusion Raman Anti-Stokes (3) et transmet les faisceaux diffusés dans la bande spectrale $B_0$ et dans la bande de visualisation $B_V$. Le filtre (13r) sépare le faisceau diffusé dans la bande de visualisation $B_V$ et le faisceau diffusé dans la bande $B_0$. Le filtre (12r) est un filtre passe-haut ayant une longueur d'onde de coupure comprise entre la bande de diffusion Raman Anti-Stokes et la bande $B_0$. Le filtre (12r) réfléchit donc la bande Raman Anti-Stokes et transmet les bandes spectrales $B_0$ et $B_V$. Le filtre (13r) est un filtre passe-bas ou passe-bande qui transmet la bande spectrale $B_0$ et réfléchit la bande de visualisation $B_V$.

La figure 27 décrit un troisième mode de réalisation, ne faisant pas partie de l'invention, en lien avec la distribution spectrale de la figure 24. Le filtre (12s) permet de superposer le faisceau d'excitation laser (1) réfléchi et le faisceau d'éclairage et de visualisation (2) transmis. Sur le faisceau diffusé collecté, le filtre (12s) transmet le faisceau diffusé dans la bande visualisation $B_V$ et réfléchit le faisceau diffusé dans la bande spectrale $B_0$ et dans la bande de diffusion Raman anti-Stokes $B_R^{aS}$. Le filtre (12s) est un filtre passe-haut dont la longueur d'onde de coupure est située entre la bande spectrale $B_0$ et la bande de visualisation $B_V$. Le filtre (13s) réfléchit le faisceau de diffusion Raman (3) dans la bande de diffusion Anti-Stokes $B_R^{aS}$ et transmet le faisceau de diffusion Rayleigh dans la bande spectrale $B_0$. Le filtre (13s) est un filtre passe-haut ou passe-bande dont la longueur d'onde de coupure est située entre la bande de diffusion Raman Anti-Stokes et la bande $B_0$ de manière à transmettre la bande $B_0$ et réfléchit la bande de diffusion Raman Anti-Stokes.

Enfin la figure 28 décrit un quatrième mode de réalisation, ne faisant pas partie de l'invention, en lien avec la distribution spectrale de la figure 24. Le filtre (12t) permet de superposer le faisceau d'excitation laser (1) et le faisceau de visualisation (2). Sur le faisceau diffusé, le filtre (12t) réfléchit le faisceau diffusé dans la bande de diffusion Raman anti-Stokes et dans la bande spectrale $B_0$ et transmet le faisceau diffusé dans la bande de visualisation $B_V$. Le filtre (13t) transmet le faisceau diffusé dans la bande de diffusion Raman anti-Stokes et réfléchit le faisceau diffusé dans la bande spectrale $B_0$. Le filtre (12t) est un filtre passe-haut ayant une longueur d'onde de coupure située entre la bande spectrale $B_0$ et la bande de visualisation $B_V$. Le filtre (12t) transmet donc la bande de visualisation $B_v$ et réfléchit la bande spectrale $B_0$ ainsi que la bande de diffusion Raman anti-Stokes. Le filtre (13t) est un filtre passe-bas ou coupe-bande qui transmet la bande de diffusion Raman anti-Stokes réfléchit la bande diffusée dans le la bande spectrale $B_0$.

Nous avons décrit un certain nombre de modes de réalisation. Toutefois, cette description n'est pas limitative et d'autres modes de réalisation sont envisageables (autres types de filtres notamment que ceux des exemples); l'invention étant définie par les revendications.

En particulier, les différentes variantes de modes de réalisation décrits en lien avec les figures 2, 6-8, 11-18, 20-23 et 25-28 se rapportent tous à une configuration de rétrodiffusion. Toutefois, le même principe s'applique également à d'autres configurations de diffusion Raman (diffusion vers l'avant, ou diffusion latérale), auquel cas les moyens pour superposer le faisceau d'excitation laser et le faisceau d'éclairage sont disjoints des moyens de filtrage du faisceau de diffusion. Le principe de l'utilisation de plages spectrales disjointes s'applique néanmoins de la même manière. L'homme du métier adaptera donc le dispositif et le procédé de l'invention aux différentes configurations expérimentales de spectrométrie Raman.

Selon encore un mode de réalisation particulièrement avantageux, on utilise le même principe avec plusieurs longueurs d'ondes laser d'excitation en même temps et des filtres multi coupures pour séparer les différentes bandes spectrales d'excitation, la bande spectrale de visualisation et les bandes spectrales Raman associées respectivement à chacune des longueurs d'onde laser d'excitation.

Dans les différents cas de filtres utilisés dans des modes de réalisation en lien avec les figures 1 à 28, on peut considérer qu'un filtre coupe-bande (notch) effectue simultanément une fonction de filtre passe-haut et une fonction de filtre passe-bas. Par conséquent, il est équivalent de remplacer un filtre passe-haut et passe-bas par un filtre coupe-bande.

Les filtres peuvent être réalisés par des empilements diélectriques ou par la technique des VBG (Volume Bragg Grating).

L'invention divulgue un arrangement de filtres sans parties mobiles qui permet d'effectuer une mesure du Raman et de visualiser l'échantillon, la visualisation et la mesure pouvant être simultanées.

Le dispositif de visualisation de l'invention est compact et présente un encombrement réduit de moitié comparé à un système de visualisation de l'art antérieur basé sur un composant optique escamotable sur le chemin optique.

Le dispositif et le procédé sont simples d'utilisation, car ils ne requièrent pas de moteur ni de parties mobiles. L'absence de pièce mobile rend aussi le dispositif robuste.

Enfin, le dispositif n'induit quasiment pas de pertes sur le signal Raman (pertes extrêmement minimes de quelques pourcent).

Le taux d'extinction des filtres peut être choisi de manière à ce qu'une très faible partie du faisceau provenant de la diffusion Rayleigh du faisceau laser d'excitation soit transmise en direction du système de visualisation de l'échantillon. De cette manière, le système de visualisation permet avantageusement de visualiser simultanément l'échantillon et la position du faisceau laser d'excitation sur l'échantillon. Le faisceau de diffusion Rayleigh étant très atténué, il ne présente pas de risque de saturation du capteur de visualisation, par exemple d'une caméra CCD.

La possibilité de visualiser l'échantillon en même temps que l'on fait la mesure Raman, rend possible des opérations basées sur le traitement de l'image de l'échantillon. Ainsi il devient possible d'effectuer un réglage d'autofocus en temps réel sur l'image de l'échantillon pendant la mesure Raman. Une autre application rendue possible par l'invention, est le suivi d'objet au cours de la mesure Raman ou une stabilisation d'image (en couplant le dispositif de l'invention à un système de déplacement de l'objet ou du porte-échantillon). D'autres applications automatiques basées par exemple sur des traitements d'image sont également possibles en combinaison avec les mesures Raman.

Le dispositif de l'invention permet simultanément la visualisation d'un échantillon et une mesure Raman de cet échantillon sans induire de pertes d'intensité optique élevées. Avantageusement, ce dispositif est composé d'éléments fixes.

Les dispositifs de l'art antérieur impliquent soit une visualisation et une mesure séquentielles, soit une visualisation concomitante d'une mesure, mais avec des pertes élevées en intensité optique. Un dispositif de l'art antérieur basé sur un ou deux séparateurs de faisceau (de type lame séparatrice ou cube séparateur) a une efficacité limitée entre 6 et 25 %.

L'efficacité (en transmission optique) d'un dispositif de l'invention composé de deux filtres est supérieure ou égale à 90%, ou même à 95 %. Le dispositif de l'invention a l'avantage de réduire considérablement les pertes optiques, et de permettre la mesure d'un signal Raman qui est toujours très faible.

## Revendications

1. Dispositif optique de spectrométrie Raman et de visualisation d'un échantillon (7), ledit dispositif comprenant :

- une source laser d'excitation (10) apte à générer un faisceau laser d'excitation (1) ayant une bande spectrale $B_0$ centrée autour d'une longueur d'onde $\lambda_0$,
- des moyens de détection (18) aptes à détecter un faisceau de diffusion Raman (3) dans une bande spectrale constituée d'une bande de mesure $B_R^{aS}$ des raies anti-Stokes et d'une bande de mesure $B_R$ des raies Stokes,

**caractérisé en ce que** le dispositif comprend :

- une source lumineuse de visualisation (11) apte à générer un faisceau de visualisation (2) ayant une bande spectrale $B_V$ distincte de la bande spectrale $B_0$ du laser et distincte de la bande spectrale du faisceau de diffusion Raman (3) à mesurer, dans lequel la longueur d'onde $\lambda_0$ de de la source laser d'excitation (10) est située à 473nm, la bande spectrale $B_V$ du faisceau de visualisation est située dans une gamme de longueurs d'onde au dessus de 600 nm, la bande spectrale $B_0$ du laser, la bande spectrale $B_V$ du faisceau de visualisation et la bande spectrale du faisceau de diffusion Raman étant définies en longueur d'onde de manière à ce que :

$$B_R^{aS} < B_0 < B_R < B_V,$$

- des moyens de visualisation (17) aptes à détecter le faisceau collecté (22) dans la bande spectrale $B_V$,
- des moyens optiques de superposition constitués d'un premier filtre et/ou d'un deuxième filtre aptes à être disposés sur le trajet optique d'un faisceau laser d'excitation (1) ayant une bande spectrale $B_0$ centrée autour d'une longueur d'onde $\lambda_0$ et sur le trajet optique d'un faisceau de visualisation (2) ayant une bande spectrale $B_V$ distincte de la bande spectrale $B_0$ du laser et distincte de la bande spectrale du faisceau de diffusion Raman (3) à mesurer, de manière à former un faisceau incident combiné d'excitation et de visualisation en direction de l'échantillon (7) ;
- un système optique apte à diriger le faisceau incident combiné d'excitation et de visualisation vers l'échantillon (7) ;
- des moyens optiques de séparation aptes à être disposés sur le trajet d'un faisceau collecté provenant de la diffusion du faisceau incident combiné d'excitation et de visualisation sur l'échantillon (7), lesdits moyens optiques de séparation étant constitués :

i. du premier filtre (12, 12a,12b,...,12r) apte à séparer spatialement ledit faisceau collecté en un premier et un deuxième faisceaux secondaires, ledit premier faisceau secondaire comprenant une bande spectrale choisie parmi la bande spectrale $B_0$ du laser, la bande spectrale $B_V$ du faisceau de visualisation et la bande spectrale du faisceau de diffusion Raman et ledit deuxième faisceau secondaire comprenant les deux autres bandes spectrales restantes parmi la bande spectrale $B_0$ du laser, la bande spectrale $B_V$ du faisceau de visualisation et la bande spectrale du faisceau de diffusion Raman ;et

ii. du deuxième filtre (13, 13a,13b,...,13r) disposé sur le trajet du deuxième faisceau secondaire et apte à séparer spatialement ledit deuxième faisceau secondaire en un premier et un deuxième faisceaux tertiaires comprenant respectivement chacun une des deux bandes spectrales restantes parmi la bande spectrale $B_0$ du laser, la bande spectrale $B_V$ du faisceau de visualisation et la bande spectrale du faisceau de diffusion Raman et

- un système optique apte à diriger le faisceau secondaire ou tertiaire (22) de bande spectrale Bv vers lesdits moyens de visualisation (17) ; et
- un système optique apte à diriger le faisceau secondaire ou tertiaire de diffusion Raman (3) dans la bande spectrale BR vers lesdits moyens de détection (18).

2. Dispositif selon la revendication 1 **caractérisé en ce que** lesdits moyens optiques de superposition comprennent un filtre optique apte à réfléchir ledit faisceau laser d'excitation de bande spectrale $B_0$ et à transmettre ledit faisceau de visualisation de bande spectrale $B_V$.

3. Dispositif selon la revendication 1 **caractérisé en ce que** lesdits moyens optiques de superposition comprennent un filtre optique apte à transmettre ledit faisceau laser d'excitation de bande spectrale $B_0$ et à réfléchir ledit faisceau de visualisation de bande spectrale $B_V$.

4. Dispositif selon l'une des revendications 1 à 3 **caractérisé en ce que** ledit premier filtre comprend un filtre optique apte à réfléchir ledit premier faisceau secondaire et à transmettre ledit deuxième faisceau secondaire.

5. Dispositif selon l'une des revendications 1 à 4 **caractérisé en ce que** ledit premier filtre comprend un filtre optique apte à transmettre ledit premier faisceau secondaire et à réfléchir ledit deuxième faisceau secondaire.

6. Dispositif selon l'une des revendications 1 à 5 **caractérisé en ce que** ledit deuxième filtre comprend un filtre optique apte à réfléchir ledit premier faisceau tertiaire et à transmettre ledit deuxième faisceau tertiaire.

7. Dispositif selon l'une des revendications 1 à 5 **caractérisé en ce que** ledit deuxième filtre comprend un filtre optique apte à transmettre ledit premier faisceau tertiaire et à réfléchir ledit deuxième faisceau tertiaire.

8. Dispositif selon l'une des revendications 3 à 7 **caractérisé en ce que** ledit filtre optique est choisi parmi un filtre passe-haut, passe-bas, passe-bande ou coupe-bande.

9. Dispositif selon l'une des revendications 1 à 8 **caractérisé en ce qu'**il comporte en outre des moyens de réglage d'autofocus.

10. Dispositif selon l'une des revendications 1 à 9 **caractérisé en ce qu'**il comporte en outre des moyens de stabilisation d'image couplés à des moyens de déplacement relatif de l'objet par rapport au faisceau d'excitation laser.

11. Procédé de spectrométrie Raman et de visualisation d'un échantillon comprenant les étapes suivantes :

- superposition d'un faisceau laser d'excitation (1) ayant une bande spectrale $B_0$ centrée autour d'une longueur d'onde $\lambda_0$ située à 473nm et d'un faisceau de visualisation (2) ayant une bande spectrale $B_V$ située dans une gamme de longueurs d'onde au dessus de 600 nm, la bande spectrale $B_V$ du faisceau de visualisation étant distincte de $\lambda_0$ et distincte de la bande spectrale du faisceau Raman (3) à mesurer constituée d'une bande de mesure $B_R{}^{aS}$ des raies anti-Stokes et d'une bande de mesure $B_R$ des raies Stokes, de manière à diriger sur un échantillon (7) un faisceau combiné d'excitation et d'éclairage ;
- collection d'un faisceau optique diffusé par ledit échantillon (7);
- séparation spatiale et spectrale dudit faisceau collecté en deux faisceaux secondaires, le premier faisceau secondaire comprenant une bande spectrale choisie parmi la bande spectrale $B_0$ du laser, la bande spectrale Bv du faisceau de visualisation et la bande spectrale $B_R$ du faisceau de diffusion Raman et le deuxième faisceau secondaire comprenant les deux autres bandes spectrales restantes parmi la bande $B_0$ spectrale du laser, la bande spectrale Bv du faisceau de visualisation et la bande spectrale du faisceau de diffusion Raman, la bande spectrale $B_0$ du laser, la bande spectrale Bv du faisceau de visualisation et la bande spectrale du faisceau de diffusion Raman étant définies en longueur d'onde de manière à ce que : $B_R{}^{aS} < B_0 < B_R < B_V$, ;
- séparation spatiale et spectrale dudit deuxième faisceau secondaire en deux faisceaux tertiaires comprenant chacun une des deux bandes de fréquence restantes parmi la bande spectrale $B_0$ du laser, la bande spectrale Bv du faisceau de visualisation et la bande spectrale du faisceau de diffusion Raman ;
- détection du faisceau collecté secondaire ou tertiaire comprenant la bande spectrale du faisceau de diffusion Raman constituée de la bande de mesure $B_R{}^{aS}$ des raies anti-Stokes et de la bande de mesure $B_R$ des raies Stokes ;
- détection du faisceau collecté secondaire ou tertiaire comprenant la bande spectrale Bv du faisceau de visualisation.

**Patentansprüche**

1. Optische Vorrichtung für Raman-Spektrometrie und für die Darstellung einer Probe (7), wobei die Vorrichtung

- eine Anregungslaserquelle (10), die geeignet ist, einen Anregungslaserstrahl (1) zu erzeugen, der ein um eine Wellenlänge $\lambda_0$ zentriertes Spektralband $B_0$ aufweist,
- Erfassungsmittel (18), die geeignet sind, einen Strahl (3) mit Raman-Streuung in einem Spektralband zu erfassen, das aus einem Meßband $B_R{}^{aS}$ der Anti-Stokes-Linien und einem Meßband $B_R$ der Stokes-Linien besteht, aufweist,

**dadurch gekennzeichnet, daß** die Vorrichtung

- eine Darstellungslichtquelle (11), die geeignet ist, einen Darstellungsstrahl (2) mit einem vom Spektralband $B_0$ des Lasers und vom zu messenden Spektralband des Strahls (3) mit Raman-Streuung verschiedenen Spektralband $B_V$ zu erzeugen, wobei die Wellenlänge $\lambda_0$ der Anregungslaserquelle (10) bei 473 nm liegt, das Spektralband Bv des Darstellungsstrahls in einem Wellenlängenbereich oberhalb 600 nm liegt, wobei das Spektralband $B_0$ des Lasers, das Spektralband $B_V$ des Darstellungsstrahls und das Spektralband des Strahls mit Raman-Streuung hinsichtlich der Wellenlänge so definiert sind, daß
- $B_R{}^{aS} < B_0 < B_R < B_V$ ist,
- Darstellungsmittel (17), die geeignet sind den im Spektralband Bv gesammelten Strahl (22) zu erfassen,
- optische Überlagerungsmittel, die aus einem ersten Filter und/oder einem zweiten Filter bestehen, die geeignet sind, auf dem optischen Weg eines Anregungslaserstrahls (1), der ein um eine Wellenlänge $\lambda_0$ zentriertes Spektralband $B_0$ aufweist, und auf dem optischen Weg eines Darstellungsstrahls (2) mit einem vom Spektralband $B_0$ des Lasers verschiedenen und vom Spektralband des zu messenden Strahls mit Raman-Streuung (3) verschiedenen Spektralband $B_V$ angeordnet zu werden, um einen einfallenden kombinierten Strahl für Anregung und Darstellung in Richtung auf die Probe (7) zu bilden,
- ein optisches System, das geeignet ist, den einfallenden kombinierten Strahl für Anregung und Darstellung auf die Probe (7) zu richten,
- optische Trennmittel, die geeignet sind, auf dem Weg eines gesammelten Strahls, der von der Streuung des einfallenden kombinierten Strahls für Anregung und Darstellung auf die Probe (7) kommt, angeordnet zu werden, wobei die optischen Trennmittel aus

i. dem ersten Filter (12, 12a, 12b, ..., 12r), der geeignet ist, den gesammelten Strahl räumlich in einen ersten und einen zweiten Sekundärstrahl zu spalten, wobei der erste Sekundärstrahl ein Spektralband aufweist, das aus dem Spektralband $B_0$ des Lasers, dem Spektralband Bv des Darstellungsstrahls und dem Spektralband des Strahls mit Raman-Streuung ausgewählt ist, und der zweite Sekundärstrahl die restlichen beiden anderen Spektralbänder aus dem Spektralband $B_0$ des Lasers, dem Spektralband Bv des Darstellungsstrahls und dem Spektralband des Strahls mit Raman-Streuung aufweist, und
ii. dem auf dem Weg des zweiten Sekundärstrahls angeordneten zweiten Filter (13, 13a, 13b, ..., 13r), der geeignet ist, den zweiten Sekundärstrahl in einen ersten und einen zweiten Tertiärstrahl zu spalten, die jeweils eins der restlichen beiden Spektralbänder aus dem Spektralband $B_0$ des Lasers, dem Spektralband $B_V$ des Darstellungsstrahls und dem Spektralband des Strahls mit Raman-Streuung aufweisen, bestehen,

- ein optisches System, das geeignet ist, den Sekundär- oder Tertiärstrahl (22) mit dem Spektralband $B_V$ auf die Darstellungsmittel (17) zu richten, und
- ein optisches System, das geeignet ist, den Sekundär- oder Tertiärstrahl mit Raman-Streuung (3) im Spektralband $B_R$ auf die Erfassungsmittel (18) zu richten, aufweist.

2. Vorrichtung gemäß Anspruch 1, **dadurch gekennzeichnet, daß** die optischen Überlagerungsmittel einen optischen Filter aufweisen, der geeignet ist, den Anregungslaserstrahl mit Spektralband $B_0$ zu reflektieren und den Darstellungsstrahl mit Spektralband $B_V$ durchzulassen.

3. Vorrichtung gemäß Anspruch 1, **dadurch gekennzeichnet, daß** die optischen Überlagerungsmittel einen optischen Filter aufweisen, der geeignet ist, den Anregungslaserstrahl mit Spektralband $B_0$ durchzulassen und den Darstellungsstrahl mit Spektralband Bv zu reflektieren.

4. Vorrichtung gemäß einem der Ansprüche 1 bis 3, **dadurch gekennzeichnet, daß** der erste Filter einen optischen Filter aufweist, der geeignet ist, den ersten Sekundärstrahl zu reflektieren und den zweiten Sekundärstrahl durchzulassen.

5. Vorrichtung gemäß einem der Ansprüche 1 bis 4, **dadurch gekennzeichnet, daß** der erste Filter einen optischen Filter aufweist, der geeignet ist, den ersten Sekundärstrahl durchzulassen und den zweiten Sekundärstrahl zu reflektieren.

6. Vorrichtung gemäß einem der Ansprüche 1 bis 5, **dadurch gekennzeichnet, daß** der zweite Filter einen optischen Filter aufweist, der geeignet ist, den ersten Tertiärstrahl zu reflektieren und den zweiten Tertiärstrahl durchzulassen.

7. Vorrichtung gemäß einem der Ansprüche 1 bis 5, **dadurch gekennzeichnet, daß** der zweite Filter einen optischen Filter aufweist, der geeignet ist, den ersten Tertiärstrahl durchzulassen und den zweiten Tertiärstrahl zu reflektieren.

8. Vorrichtung gemäß einem der Ansprüche 3 bis 7, **dadurch gekennzeichnet, daß** der optische Filter aus einem Hochpaßfilter, einem Tiefpaßfilter, einem Bandpaßfilter oder einem Bandsperrfilter ausgewählt ist.

9. Vorrichtung gemäß einem der Ansprüche 1 bis 8, **dadurch gekennzeichnet, daß** sie außerdem Autofokuseinstellmittel aufweist.

10. Vorrichtung gemäß einem der Ansprüche 1 bis 9, **dadurch gekennzeichnet, daß** sie außerdem Bildstabilisationsmittel aufweist, die mit Mitteln zum relativen Verlagern des Objekts gegenüber dem Anregungslaserstrahl gekoppelt sind.

11. Verfahren für Raman-Spektrometrie und für die Darstellung einer Probe, das die folgenden Schritte aufweist:

- Überlagern eines Anregungslaserstrahls (1), der ein um eine bei 473 nm liegende Wellenlänge $\lambda_0$ zentriertes Spektralband $B_0$ aufweist, und eines Darstellungsstrahls (2), der ein Spektralband Bv aufweist, das in einem Wellenlängenbereich oberhalb 600 nm liegt, wobei das Spektralband Bv des Darstellungsstrahls von $\lambda_0$ verschieden ist und vom aus einem Meßband $B_R^{aS}$ der Anti-Stokes-Linien und einem Meßband $B_R$ der Stokes-Linien bestehenden Spektralband des zu messenden Ramanstrahls (3) verschieden ist, um einen kombinierten Anregungs- und Beleuchtungsstrahl auf eine Probe (7) zu richten;
- Sammeln eines von der Probe (7) gestreuten optischen Strahls;
- Räumliches und spektrales Trennen des gesammelten Strahls in zwei Sekundärstrahlen, wobei der erste Sekundärstrahl ein Spektralband aufweist, das aus dem Spektralband $B_0$ des Lasers, dem Spektralband Bv des Darstellungsstrahls und dem Spektralband $B_R$ des Strahls mit Raman-Streuung ausgewählt ist, und der zweite Sekundärstrahl die restlichen beiden anderen Spektralbänder aus dem Spektralband $B_0$ des Lasers, dem Spektralband Bv des Darstellungsstrahls und dem Spektralband des Strahls mit Raman-Streuung aufweist, wobei das Spektralband $B_0$ des Lasers, das Spektralband Bv des Darstellungsstrahls und das Spektralband des Strahls mit Raman-Streuung hinsichtlich der Wellenlänge so definiert sind, daß $B_R^{aS} < B_0 < B_R < B_V$ ist;
- Räumliches und spektrales Trennen des zweiten Sekundärstrahls in zwei Tertiärstrahlen, die jeweils eins der restlichen beiden Spektralbänder aus dem Spektralband $B_0$ des Lasers, dem Spektralband Bv des Darstellungsstrahls und dem Spektralband des Strahls mit Raman-Streuung aufweisen;
- Erfassen des gesammelten Sekundär- oder Tertiärstrahls, der das aus dem Meßband $B_R^{aS}$ der Anti-Stokes-Linien und dem Meßband $B_R$ der Stokes-Linien bestehende Spektralband des Strahls mit Raman-Streuung aufweist;
- Erfassen des gesammelten Sekundär- oder Tertiärstrahls, der das Spektralband $B_V$ des Darstellungsstrahls aufweist.

**Claims**

1. An optical device for Raman spectrometry and for viewing a sample (7), said device comprising:

- an excitation laser source (10) adapted to generate an excitation laser beam (1) having a spectral band $B_0$ centered about a wavelength $\lambda_0$,
- detection means (18) adapted to detect a Raman scattering beam (3) in a spectral band consisted of a measurement band $B_R^{aS}$ of anti-Stokes lines and a measurement band $B_R$ of Stokes lines,

**characterized in that** the device comprises:

- a viewing light source (11) adapted to generate a viewing beam (2) having spectral band Bv distinct from the spectral band $B_0$ of the laser and distinct from the spectral band of the Raman scattering beam (3) to be measured, wherein the wavelength $\lambda_0$ of the excitation laser source (10) is located at 473 nm, the viewing spectral band Bv of the viewing beam is located in a wavelength range above 600 nm, the spectral band $B_0$ of the laser, the spectral band Bv of the viewing beam and the spectral band of the Raman scattering beam being defined in wavelength in such a manner that:

$$B_R{}^{aS} < B_0 < B_R < B_V \, ,$$

-viewing means (17) adapted to detect the collected beam (22) in the spectral band Bv,

- optical superimposition means consisted of a first filter and/or a second filter adapted to be placed on the optical path of an excitation laser beam (1) having a spectral band $B_0$ centered about a wavelength $\lambda_0$ and on the optical path of a viewing beam (2) having a spectral band Bv distinct from the spectral band $B_0$ of the laser and distinct from the spectral band of the Raman scattering beam (3) to be measured, so as to form a combined excitation and viewing incident beam toward the sample (7);

- an optical system adapted to direct the combined excitation and viewing incident beam toward the sample (7);

- optical separation means adapted to be placed on the path of a collected beam coming from the scattering of the combined excitation and viewing incident beam on the sample (7), said optical separation means being consisted of:

    i. the first filter (12, 12a, 12b, ..., 12r) adapted to spatially separate said collected beam into a first and a second secondary beams, said first secondary beam comprising a spectral band chosen from the spectral band $B_0$ of the laser, the spectral band Bv of the viewing beam and the spectral band of the Raman scattering beam, and said second secondary beam comprising the two other remaining spectral bands among the spectral band $B_0$ of the laser, the spectral band Bv of the viewing beam and the spectral band of the Raman scattering beam; and

    ii. the second filter (13, 13a, 13b, ..., 13r) placed on the path of the second secondary beam and adapted to spatially separate said second secondary beam into a first and a second tertiary beams, each respectively comprising one of the two remaining spectral bands among the spectral band $B_0$ of the laser, the spectral band Bv of the viewing beam and the spectral band of the Raman scattering beam and

- an optical system adapted to direct the secondary or tertiary beam (22) of spectral band Bv toward said viewing means (17); and

- an optical system adapted to direct the secondary or tertiary Raman scattering beam (3) in the spectral band $B_R$ toward said detection means (18).

2. The device according to claim 1 **characterized in that** said optical superimposition means comprise an optical filter adapted to reflect said excitation laser beam of spectral band $B_0$ and to transmit said viewing beam of spectral band Bv.

3. The device according to claim 1 **characterized in that** said optical superimposition means comprise an optical filter adapted to transmit said excitation laser beam of spectral band $B_0$ and to reflect said viewing beam of spectral band $B_V$.

4. The device according to one of claims 1 to 3 **characterized in that** said first filter comprises an optical filter adapted to reflect said first secondary beam and to transmit said second secondary beam.

5. The device according to one of claims 1 to 4 **characterized in that** said first filter comprises an optical filter adapted to transmit said first secondary beam and to reflect said second secondary beam.

6. The device according to one of claims 1 to 5 **characterized in that** said second filter comprises an optical filter adapted to reflect said first tertiary beam and to transmit said second tertiary beam.

7. The device according to one of claims 1 to 5 **characterized in that** said second filter comprises an optical filter adapted to transmit said first tertiary beam and to reflect said second tertiary beam.

8. The device according to one of claims 3 to 7 **characterized in that** said optical filter is chosen among a high-pass, low-pass, band-pass or notch filter.

9. The device according to one of claims 1 to 8 **characterized in that** it further comprises autofocus adjustment means.

10. The device according to one of claims 1 to 9 **characterized in that** it further comprises image stabilization means coupled to means for relative displacement of the object with respect to the laser excitation beam.

11. A method for Raman spectrometry and for viewing a sample comprising the following steps:

    - superimposing an excitation laser beam (1) having a spectral band $B_0$ centered about a wavelength $\lambda_0$ located at 473 nm and a viewing beam (2) having a spectral band Bv located in a wavelength range above 600 nm, the spectral band Bv of the viewing beam being distinct from $\lambda_0$ and distinct from the spectral band of the Raman beam (3) to be measured consisted of a measurement band $B_R{}^{aS}$ of anti-Stokes lines and a measurement band $B_R$ of Stokes lines, so as to direct on a sample (7) a combined excitation and illumination beam;

- collecting an optical beam scattered by said sample (7);

- spatially and spectrally separating said collected beam into two secondary beams, the first secondary beam comprising a spectral band chosen among the spectral band $B_0$ of the laser, the spectral band $B_V$ of the viewing beam and the spectral band $B_R$ of the Raman scattering beam, and the second secondary beam comprising the two other remaining spectral bands among the spectral band $B_0$ of the laser, the spectral band $B_V$ of the viewing beam and the spectral band of the Raman scattering beam, the spectral band $B_0$ of the laser, the spectral band $B_V$ of the viewing beam and the spectral band of the Raman scattering beam being defined in wavelength in such a manner that:

$$B_R{}^{aS} < B_0 < B_R < B_V \, ;$$

- spatially and spectrally separating said second secondary beam into two tertiary beams, each comprising one of the two remaining spectral bands among the spectral band $B_0$ of the laser, the spectral band $B_V$ of the viewing beam and the spectral band $B_R$ of the Raman scattering beam;

- detecting the secondary or tertiary collected beam comprising the spectral band of the Raman scattering beam consisted of the measurement band $B_R{}^{aS}$ of anti-Stokes lines and the measurement band $B_R$ of Stokes lines;

- detecting the secondary or tertiary collected beam comprising the spectral band $B_V$ of the viewing beam.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22

Figure 23

$B_R^{aS}$

$B_V$

$\lambda_0$

$\lambda$

Figure 24

Figure 25

Figure 26

Figure 27

Figure 28

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008052221 A
- WO 2004081549 A
- WO 2010024397 A